# EUROPÄISCHE PATENTSCHRIFT

(11) **EP 4 031 945 B1**
(45) Veröffentlichungstag und Bekanntmachung des Hinweises auf die Patenterteilung: **17.01.2024**
(21) Anmeldenummer: 20761200.3
(22) Anmeldetag: 20.08.2020
(51) Int. Cl.: H04L 9/40, G05B 19/042, H04L 9/32

(54) **VERFAHREN ZUR VALIDIERUNG ODER VERIFIKATION EINES FELDGERÄTS**
METHOD FOR VALIDATING OR VERIFYING A FIELD DEVICE
PROCÉDÉ POUR VALIDER OU VÉRIFIER UN APPAREIL DE TERRAIN

(30) Priorität: 20.09.2019 DE 102019125417
(43) Veröffentlichungstag der Anmeldung: 27.07.2022
(73) Patentinhaber: Endress+Hauser Process Solutions AG, 4153 Reinach (CH)
(72) Erfinder: ALBER, Thomas, 70567 Stuttgart (DE); KILIAN, Markus, 79249 Merzhausen (DE); PÖSCHMANN, Axel, 4057 Basel (CH); BIHLER, Sascha, 79618 Rheinfelden (DE); MERKLIN, Simon, 79353 Bahlingen a. K. (DE)
(74) Vertreter: Kratt-Stubenrauch, Kai Michael
(86) Internationale Anmeldenummer: PCT/EP2020/073411
(87) Internationale Veröffentlichungsnummer: WO 2021/052711

(56) Entgegenhaltungen:
- EP-A1- 3 339 989
- EP-A2- 2 579 116
- DE-A1-102006 035 526
- DE-A1-102012 109 348
- US-A1- 2008 082 449

## Beschreibung

Die Erfindung betrifft ein Verfahren zur Validierung oder Verifikation eines Feldgeräts, das eine physikalische, chemische oder biologische Prozessgröße eines Prozessmediums in der Automatisierungstechnik bestimmt oder überwacht.

In Automatisierungsanlagen, insbesondere in Prozessautomatisierungsanlagen, werden vielfach Feldgeräte eingesetzt, die zur Erfassung und/ oder Beeinflussung von Prozessgrößen eines Mediums dienen. Das Medium selbst kann flüssig, gasförmig oder auch fest sein. Zur Erfassung der Prozessgrößen dienen Sensoren, die beispielsweise in Füllstandsmessgeräte, Durchflussmessgeräte, Druck- und Temperaturmessgeräte, pH-Redoxpotentialmessgeräte, Leitfähigkeitsmessgeräte, usw. integriert sind, welche die entsprechenden Prozessgrößen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand eines Mediums in einem Behälter geändert werden kann. Im Zusammenhang mit der Erfindung werden als Feldgeräte alle Geräte bezeichnet, die prozessnah eingesetzt werden und die prozessrelevante Informationen liefern oder verarbeiten. So sind unter dem Begriff "Feldgeräte" auch Remote I/Os, Funkadapter und anderweitige Komponenten zu verstehen, die auf der Feldebene im Prozess angeordnet sind. Eine Vielzahl solcher Feldgeräte wird von der Firma Endress+Hauser hergestellt und vertrieben.

Die Feldgeräte sind üblicherweise an einen Feldbus angeschlossen. Die Kommunikation zwischen den Feldgeräten und/oder mit einer übergeordneten Einheit erfolgt über zumindest eines der in der Automatisierungstechnik gebräuchlichen Feldbusprotokolle. In zunehmendem Maße erfolgt die Kommunikation aber auch über Internet-Protokolle.

Wird an einem der Feldgeräte ein unerlaubter Eingriff vorgenommen - wird das Feldgerät also manipuliert -, kann dies zu erheblichen Nachteilen für den Betreiber einer Automatisierungsanlage führen. Im schlimmsten Fall verursacht die Manipulation einen Ausfall der Produktion in der entsprechenden Prozessanlage, und/oder es kann zu Personen- und Sachschaden kommen. Kritisch ist es weiterhin, wenn die Manipulation an einem eichfähigen Feldgerät durchgeführt wird.

Um sicher zu sein, dass keine Manipulation an der Konfiguration eines Feldgeräts erfolgt ist, werden heute in einem aufwändigen Vergleichsverfahren Inventarlisten und Konfigurationsparameter überprüft. Über dieses Verfahren lässt sich ermitteln, ob die Automatisierungsanlage noch in einem vom Betreiber gewünschten und definierten Sollzustand ist. Zieht man in Betracht, dass in einer Automatisierungsanlage einige hundert oder auch tausende Feldgeräte eingesetzt sein können, so erweist es sich als äußerst schwierig, zusätzliche und/oder manipulierte Feldgeräte über das zuvor beschriebene Vergleichsverfahren aufzufinden. Aufgrund dieses sehr zeitaufwändigen Validierungsverfahrens wird es daher oftmals überhaupt nicht durchgeführt.

Weiterhin hat ein Kunde bislang nicht die Möglichkeit, ohne große Umstände und "auf den ersten Blick" zu erkennen, ob in einem Feldgerät ausschließlich die Originalkomponenten des Herstellers verbaut sind; dies gilt sowohl im Falle der Erstauslieferung als auch in einem Servicefall, wenn das Feldgerät zwecks Reparatur in die Sphäre eines Dienstleisters gelangt. Unter Originalkomponenten werden im Zusammenhang mit der Erfindung übrigens Hardwarekomponenten, Softwarekomponenten, wie Firmware und Anwendungsprogramme, als auch die Parameter- bzw. Konfigurationseinstellungen eines Feldgeräts verstanden.

Um sicherzustellen, dass die Firmware eines Feldgeräts nicht manipuliert ist, ist es bereits bekannt geworden, der Firmware eine Checksumme zuzuordnen, die auf CRC32 (CRC: Cyclic Redundancy Check) basiert. Es handelt sich hierbei um einen Code, der in der Lage ist, Änderungen in Daten zu erkennen. Unter Firmware versteht man die Software, die in elektronischen Geräten eingebettet ist. Sie ist zumeist in einem Flash-Speicher, einem EPROM, EEPROM oder ROM gespeichert und durch den Anwender nicht oder nur mit speziellen Mitteln bzw. Funktionen austauschbar. Der Begriff leitet sich davon ab, dass Firmware funktional fest mit der Hardware verbunden ist. Die Hardware ist ohne die Firmware nicht sinnvoll nutzbar. Die Firmware hat eine Zwischenstellung zwischen Hardware und der Anwendungssoftware, also den ggf. austauschbaren Programmen eines Feldgerätes. Bevorzugt kommt der bekannte Authentizitätsschutz übrigens bei eichfähigen Feldgeräten zum Einsatz. Eine Lösung, die einen generellen Manipulationsschutz für Feldgeräte liefert, ist bislang nicht bekannt geworden.

Die DE102006035526 A1 offenbart, dass vom Feldgerätehersteller bei der Fertigung des Feldgeräts ein Freischaltcode gewonnen wird. Der Freischaltcode wird auf Kundenseite entschlüsselt und dessen Inhalt verglichen, um Sonderfunktionalitäten des Feldgeräts freizuschalten.

Der Erfindung liegt die Aufgabe zugrunde, eine einfache Methode zur Überprüfung der Integrität eines Feldgeräts anzugeben. Ein Feldgerät ist im Sinne der Erfindung integer, wenn es in allen seinen Komponenten dem originalen Zustand des Herstellers bei Auslieferung an den Nutzer entspricht.

Die Aufgabe wird gelöst durch ein Verfahren zur Validierung oder Verifikation eines Feldgeräts, das eine physikalische, chemische oder biologische Prozessgröße eines Prozessmediums in der Automatisierungstechnik bestimmt oder überwacht, wobei das Feldgerät aus mehreren Hardware- und Softwaremodulen zusammengesetzt ist. Auf Herstellerseite wird das Feldgerät mit einer ersten kryptografischen Signatur versehen, wobei die Signatur eindeutig den Gerätehersteller und/oder den originalen Auslieferungszustand des Feldgeräts, definiert durch genuine Hardware und Software/Firmware und genuine Konfigurationseinstellungen, kennzeichnet. Auf Kundenseite wird die Herkunft und/oder die Integrität des Feldgeräts mittels der ersten kryptografischen Signatur validiert/verifiziert. Nach einer Anpassung des Feldgeräts an eine definierte Applikation wird das Feldgerät auf Kundenseite mit einer zweiten kryptografischen Signatur versehen, wobei die zweite kryptografische Signatur eindeutig die auf Kundenseite vorgenommenen Anpassungen des Feldgeräts als einen applikationsspezifischen Sollzustand des Feldgeräts kennzeichnet. Während der Zeitdauer der Installation des Feldgeräts in der definierten Applikation hat der Kunde jederzeit die Möglichkeit, über die zweite kryptografische Signatur eine Validierung oder Verifikation des Feldgeräts durchzuführen.

Bevorzugt am Ende des Produktionsprozesses wird das üblicherweise modular aufgebaute Feldgerät mit der ersten kryptografischen Signatur versehen. Das Feldgerät besteht aus Hardwarekomponenten, z.B. elektronischen Baugruppen, und Softwarekomponenten, wie Firmware, Anwendungsprogrammen und Konfigurationsparametern. Diese erste kryptografische Signatur kennzeichnet eindeutig den Hersteller und/oder den originalen Auslieferzustand und somit die Integrität des entsprechenden Feldgeräts.

Bei Anlieferung dient diese kryptografische Signatur des Herstellers oder Lieferanten dazu, dass der Kunde/der Nutzer die Herkunft und Integrität des Feldgeräts validieren/verifizieren kann.

Hat der Kunde das Feldgerät installiert, z.B. in einer Automatisierungsanlage, so wird auf Kundenseite das Feldgerät üblicherweise an die jeweilige Anwendung bzw. Applikation angepasst. Das Feldgerät wird konfiguriert /parametriert, wobei ggf. die vom Hersteller voreingestellten Konfigurationsdaten geändert werden. Anschließend wird das Feldgerät auf Kundenseite mit einer zweiten kryptografischen Signatur versehen. Diese Signatur ist z.B. kundenspezifisch, anlagenspezifisch, gerätespezifisch, usw. Mit der zweiten Signatur kennzeichnet der Kunde/der autorisierte Nutzer somit den von ihm gewünschten Sollzustand des Feldgeräts.

Aufgrund dieser weiteren Signatur kann der Kunde die Integrität des Feldgeräts jederzeit überprüfen. Insbesondere kann er auf einfache Weise prüfen und feststellen, ob Änderungen an den elektronischen Baugruppen, der Firmware, der Software und/oder den Konfigurationsdaten des Feldgeräts durchgeführt wurden.

So kann anhand der Validierung oder Verifikation des Feldgeräts überprüft werden, ob ein Istzustand des Feldgeräts mit dem vom Kunden/Nutzer autorisierten und/oder definierten Sollzustand übereinstimmt und ob das Feldgerät integer ist. Weiterhin kann über den Signaturvergleich auf einfache Art und Weise festgestellt werden, wenn eine unautorisierte Änderung an den Hardware- und/oder den Softwaremodulen des Feldgeräts versucht oder durchgeführt wurde.

Eine Ausgestaltung des erfindungsgemäßen Verfahrens sieht vor, dass die erste kryptografische Signatur und/oder die zweite kryptografische Signatur über ein asymmetrisches Kryptosystem, bestehend aus Private Key, und einem öffentlichen Verifikationsschlüssel, einem Public Key, erstellt werden.

Der Begriff "asymmetrisches Kryptosystem" ist ein Oberbegriff für Public-Key-Verschlüsselungsverfahren, Public-Key-Authentifizierungen und digitale Signaturen. Das asymmetrische Kryptosystem oder das Public-Key-Kryptosystem ist ein kryptographisches Verfahren, bei dem im Gegensatz zu einem symmetrischen Kryptosystem die kommunizierenden Parteien keinen gemeinsamen geheimen Schlüssel zu kennen brauchen. Jeder Benutzer erzeugt sein eigenes Schlüsselpaar, das aus einem geheimen Teil (privater Schlüssel) und einem nicht geheimen Teil (öffentlicher Schlüssel) besteht. Der öffentliche Schlüssel ermöglicht es jedermann, Daten für den Besitzer des privaten Schlüssels zu verschlüsseln, dessen digitale Signaturen zu prüfen oder ihn zu authentifizieren. Der private Schlüssel ermöglicht es seinem Besitzer, mit dem öffentlichen Schlüssel verschlüsselte Daten zu entschlüsseln, digitale Signaturen zu erzeugen oder sich zu authentisieren.

Mit der Erfindung und ihren Ausgestaltungen ist es möglich, über eine einfache, automatisierbare Signaturprüfung sicher zu erkennen, ob die Module eines Feldgeräts genuin sind und ob sich ein Feldgerät noch in einem vom Kunden gewünschten und autorisierten Sollzustand befinden. Feldgeräte, die keine gültige Signatur haben, lassen sich automatisiert ermitteln und ggf. aussortieren.

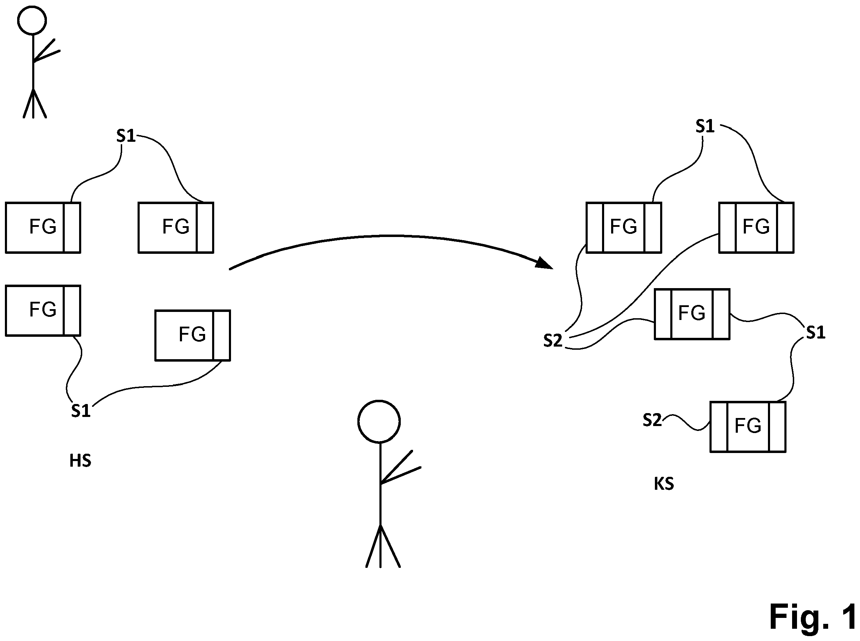

Das erfindungsgemäße Verfahren zur Validierung oder Verifikation eines Feldgeräts FG, das eine physikalische, chemische oder biologische Prozessgröße eines Prozessmediums in der Automatisierungstechnik bestimmt oder überwacht, wird anhand der Figur Fig. 1 näher erläutert. Fig. 1 zeigt auf der Herstellerseite HS und auf der Kundenseite KS mehrere Feldgeräte FG. Jedes der Feldgerät FG ist aus mehreren Hardware- und Softwaremodulen zusammengesetzt. Auf der Herstellerseite HS wird das Feldgerät FG vor der Auslieferung zum Kunden mit einer ersten kryptografischen Signatur S1 versehen. Die erste kryptografische Signatur S1 kennzeichnet eindeutig den Gerätehersteller und/oder den originalen Auslieferungszustand des Feldgeräts FG. Das Feldgerät weist garantiert genuine Hardware und Software/Firmware und genuine Konfigurationseinstellungen auf.

Auf Kundenseite KS werden die Herkunft und die Integrität des Feldgeräts FG mittels der ersten kryptografischen Signatur S1 von einem Servicemitarbeiter S validiert/verifiziert.

Üblicherweise erfolgt auf Kundenseite eine erneute Konfiguration, um das Feldgerät FG optimal an eine definierte Applikation, in der es installiert ist, anzupassen. Anschließend wird das Feldgerät FG auf Kundenseite KS von einem Servicemitarbeiter S mit einer zweiten kryptografischen Signatur S2 versehen. Die zweite kryptografische Signatur S2 kennzeichnet eindeutig die auf Kundenseite KS vorgenommene Anpassung des Feldgeräts FG als den applikationsspezifischen Sollzustand des Feldgeräts FG. Somit ist auf Kundenseite die Möglichkeit gegeben, jederzeit -auch während des Betriebs des Feldgeräts FG in der definierten Applikation- über die zweite kryptografische Signatur S2 festzustellen, ob sich das Feldgerät noch in seinem validierten und verifizierten Sollzustand befindet. Da der Validierungs/Verifizierungsprozess automatisiert werden kann, ist eine Ist-Soll-Überprüfung ohne großen Zeitaufwand auch während des Betriebs der Feldgeräts FG möglich.

## Patentansprüche

1. Verfahren zur Validierung oder Verifikation eines Feldgeräts (FG), das eine physikalische, chemische oder biologische Prozessgröße eines Prozessmediums in der Automatisierungstechnik bestimmt oder überwacht, wobei das Feldgerät (FG) aus mehreren Hardware- und Softwaremodulen zusammengesetzt ist,
wobei das Feldgerät (FG) auf Herstellerseite (HS) mit einer ersten kryptografischen Signatur (S1) versehen wird, wobei die erste kryptografische Signatur (S1) eindeutig den Gerätehersteller und/oder den originalen Auslieferungszustand des Feldgeräts (FG), definiert durch genuine Hardware und Software/Firmware und genuine Konfigurationseinstellungen, kennzeichnet,
wobei auf Kundenseite (KS) mittels der ersten kryptografischen Signatur (S1) die Herkunft und die Integrität des Feldgeräts (FG) validiert/verifiziert wird,
wobei nach einer Anpassung des Feldgeräts (FG) an eine definierte Applikation das Feldgerät (FG) auf Kundenseite (KS) mit einer zweiten kryptografischen Signatur (S2) versehen wird, wobei die zweite kryptografische Signatur (S2) eindeutig die auf Kundenseite (KS) vorgenommenen Anpassungen des Feldgeräts (FG) als einen applikationsspezifischen Sollzustand des Feldgeräts (FG) kennzeichnet, und
wobei auf Kundenseite (KS) während der Zeitdauer der Installation des Feldgeräts (FG) in der definierten Applikation über die zweite kryptografische Signatur (S2) zumindest eine Validierung oder Verifikation des Feldgeräts (FG) durchgeführt wird.

2. Verfahren nach Anspruch 1,
wobei als zweite kryptografische Signatur (S2) insbesondere eine kundenspezifische, anlagenspezifische und/oder gerätespezifische Signatur verwendet werden/wird.

3. Verfahren nach Anspruch 1 oder 2,
wobei anhand der Validierung oder Verifikation des Feldgeräts (FG) überprüft wird, ob ein jeweiliger Istzustand des Feldgeräts (FG) mit dem Sollzustand übereinstimmt und das Feldgerät (FG) integer ist, oder ob eine unautorisierte Änderung an den Hardware- und/oder den Softwaremodulen des Feldgeräts (FG) durchgeführt wurde.

4. Verfahren nach einem oder mehreren der vorhergehenden Ansprüche,
wobei die erste kryptografische Signatur (S1) und/oder die zweite kryptografische Signatur (S2) über ein asymmetrisches Kryptosystem, bestehend aus Private Key, und einem öffentlichen Verifikationsschlüssel, einem Public Key, erstellt werden.

5. Verfahren nach einem oder mehreren der vorhergehenden Ansprüche,
wobei als Hardwaremodule insbesondere elektronische Baugruppen gekennzeichnet werden.

6. Verfahren nach einem oder mehreren der vorhergehenden Ansprüche,
wobei als Softwaremodule insbesondere eine Firmware oder Konfigurationsparameter gekennzeichnet werden.

## Claims

1. Method to validate or verify a field device (FG) that determines or monitors a physical, chemical or biological process variable of a process medium in the field of automation technology, wherein the field device (FG) comprises multiple hardware and software modules,
wherein the field device (FG) is furnished with a first cryptographic signature (S1) on the manufacturer side (HS), wherein the first cryptographic signature (S1) unequivocally identifies the device manufacturer and/or the original delivery state of the field device (FG), as defined by genuine hardware and software/firmware, as well as genuine configuration settings,
wherein on the customer side (KS) both the origin and integrity of the field device (FG) is validated/verified via the first cryptographic signature (S1), wherein the field device (FG) is furnished with a second cryptographic signature (S2) on the customer side (KS) following an adaptation of the field device (FG) to a defined application, wherein the second cryptographic signature (S2) unequivocally identifies the adaptations of the field device (FG) made on the customer side (KS) as an application-specific target condition of the field device (FG) and wherein at least one validation or verification of the field device (FG) is performed on the customer side (KS) in the defined application via the second cryptographic signature (S2) during the period in which the field device (FG) is being installed.

2. Method according to claim 1,
wherein in particular a customer-specific, system-specific and/or devicespecific signature is/are used as a second cryptographic signature (S2).

3. Method according to claim 1 or 2,
wherein a check is performed based on the validation or verification of the field device (FG) to determine whether a respective actual state of the field device (FG) matches the target state and the field device (FG) is therefore complete or whether an unauthorized change to the hardware and/or software modules of the field device (FG) has been made.

4. Method according to one or more of the preceding claims,
wherein the first cryptographic signature (S1) and/or the second cryptographic signature (S2) are produced via an asymmetrical cryptosystem, comprising both a private key and a public key.

5. Method according to one or more of the preceding claims, wherein in particular electronic assemblies are designated as hardware modules.

6. Method according to one or more of the preceding claims,
wherein in particular a firmware or configuration parameters are designated as software modules.

## Revendications

1. Procédé destiné à la validation ou à la vérification d'un appareil de terrain (FG), lequel appareil détermine ou surveille une grandeur de process physique, chimique ou biologique d'un produit de process dans la technique d'automatisation,
l'appareil de terrain (FG) étant composé de plusieurs modules matériels et logiciels,
l'appareil de terrain (FG) étant pourvu, côté fabricant (HS), d'une première signature cryptographique (S1), la première signature cryptographique (S1) identifiant clairement le fabricant de l'appareil et/ou l'état de livraison d'origine de l'appareil de terrain (FG), défini par un matériel et un logiciel/firmware authentiques et des réglages de configuration authentiques,
l'origine et l'intégrité de l'appareil de terrain (FG) étant validées/vérifiées, côté client (KS), au moyen de la première signature cryptographique (S1), l'appareil de terrain (FG) étant pourvu d'une deuxième signature cryptographique (S2), côté client (KS), après une adaptation de l'appareil de terrain (FG) à une application définie, la deuxième signature cryptographique (S2) caractérisant clairement les adaptations de l'appareil de terrain (FG) effectuées côté client (KS) comme un état de consigne de l'appareil de terrain (FG) spécifique à l'application, et
au moins une validation ou une vérification de l'appareil de terrain (FG) étant effectuée, côté client (KS), pendant la durée de l'installation de l'appareil de terrain (FG) dans l'application définie par l'intermédiaire de la deuxième signature cryptographique (S2).

2. Procédé selon la revendication 1,
pour lequel on utilise comme deuxième signature cryptographique (S2) notamment une signature spécifique au client, spécifique à l'installation et/ou spécifique à l'appareil.

3. Procédé selon la revendication 1 ou 2,
pour lequel on vérifie, à l'aide de la validation ou de la vérification de l'appareil de terrain (FG), si un état réel respectif de l'appareil de terrain (FG) correspond à l'état de consigne et si l'appareil de terrain (FG) est intègre, ou si une modification non autorisée a été effectuée sur les modules matériels et/ou logiciels de l'appareil de terrain (FG).

4. Procédé selon l'une ou plusieurs des revendications précédentes,
pour lequel la première signature cryptographique (S1) et/ou la deuxième signature cryptographique (S2) sont générées par l'intermédiaire d'un système cryptographique asymétrique composé d'une clé privée (« Private Key ») et d'une clé publique de vérification (« Public Key »).

5. Procédé selon l'une ou plusieurs des revendications précédentes,
pour lequel, concernant les modules matériels, il s'agit notamment de modules électroniques.

6. Procédé selon l'une ou plusieurs des revendications précédentes,
pour lequel, concernant les modules logiciels, il s'agit notamment d'un firmware ou de paramètres de configuration.
